# EUROPEAN PATENT SPECIFICATION

(11) **EP 2 103 835 B1**
(45) Date of publication and mention of the grant of the patent: **24.04.2019**
(21) Application number: 09002364.9
(22) Date of filing: 19.02.2009
(51) Int. Cl.: F16F 9/46

(54) **Damping valve**
Dämpferventil
Vanne d'amortissement

(30) Priority: 17.03.2008 JP 2008067353
(43) Date of publication of application: 23.09.2009
(73) Proprietor: KYB Corporation, Tokyo 105-6111 (JP)
(72) Inventor: Masamura, Tatsuya, Minato-ku Tokyo 105-6111 (JP); Kamakura, Ryosuke, Minato-ku Tokyo 105-6111 (JP)
(74) Representative: Grünecker Patent- und Rechtsanwälte PartG mbB

(56) References cited:
- EP-A- 0 399 326
- EP-A- 0 561 404
- DE-A1- 4 104 110
- DE-A1- 4 107 599
- DE-T2- 69 300 113
- US-A- 5 586 627
- US-B1- 6 182 805

## Description

This invention relates to a damping valve provided in a shock absorber for the purpose of generating a damping force by exerting resistance on a flow of fluid discharged from a cylinder to a reservoir in accordance with the contraction/elongation of the shock absorber.

### BACKGROUND OF THE INVENTION

A linear motion type shock absorber comprises a damping valve which generates a damping force by exerting resistance on a flow of fluid discharged from a cylinder to a reservoir in accordance with an operation of the shock absorber.

Japanese Patent Serial No. 3064964 proposes a damping valve for this purpose.

The damping valve according to this prior art comprises a rod having a ring groove formed by two side walls on its outer circumference, a plate having a smaller thickness than the width of the ring groove and provided with a hole surrounding the ring groove, a solenoid which biases the rod in one direction when energized, and a spring which biases the rod against a thrusting force exerted by the solenoid. The fluid discharged from the cylinder to the reservoir passes through a space between the ring groove and the plate.

When the solenoid is energized, the rod displaces in a direction against the spring and one side wall of the ring groove approaches the plate so as to narrow a first gap formed therebetween. As a result, the damping valve generates a damping force on the basis of a flow resistance of this first gap. When the solenoid is not energized, the rod displaces according to a biasing force of the spring in the opposite direction and the other side wall of the ring groove approaches the plate so as to narrow a second gap formed therebetween. As a result, the damping valve generates a damping force on the basis of a flow resistance of this second gap.

When the shock absorber operates normally, a power current is always supplied from a power current source to the solenoid and the damping force is generated in the first gap. By varying the power current, the width of the gap varies. Different settings of damping characteristics are thereby enabled. The operation position of the damping valve in which the first gap generates a damping force is referred to as a normal valve position.

When, on the other hand, the power current is not supplied to the solenoid due to, for example, trouble in the power current source, the rod biased by the spring displaces to narrow the second gap until the rod contacts a stopper and its further displacement is thereby prevented. In this state, the damping force is generated in the second gap. The width of the second gap is determined by the stopper. The stopper is supported by a screw feed mechanism such that its position can be arbitrarily adjusted. The operation position of the damping valve in which the second gap generates a damping force is referred to as an emergency valve position.

### SUMMARY OF THE INVENTION

In the damping valve according to the prior art, a situation in which the stopper is positioned such that the second gap remains greater than the first gap may arise. In this case, the damping force is generated by the first gap despite the fact that the solenoid is not energized, and hence the emergency valve position does not function properly. The adjustable range in the flow cross-sectional area of the first gap in the normal valve position is also narrowed by the stopper, and therefore an optimal damping force in the normal valve position may not be obtained.

The document US 6 182 805 B1 discloses a damping valve comprising a flow path of fluid, a normal state operation valve disposed in the flow path, an emergency state operation valve disposed in the flow path downstream of the normal state operation valve, a solenoid which generates a magnetic force according to a supply of power current, and a driving mechanism which varies a flow resistance of the normal state operation valve and a flow resistance of the emergency state operation valve using a magnetic force generated by the solenoid.

It is an object of this invention to ensure generation of an expected damping force during an emergency operation of a damping valve while enabling wide-range adjustment of the damping force during a normal operation of the same.

### This object is solved by the features of claim 1.

### Further improvements are laid down in the subclaims.

The details as well as other features and advantages of this invention are set forth in the remainder of the specification and are shown in the accompanying drawings.

### BRIEF DESCRIPTION OF THE DRAWINGS

FIG. 1 is a schematic longitudinal sectional view of a shock absorber in which a damping valve according to this invention is installed.
FIG. 2 is a longitudinal sectional view of the damping valve.
FIG. 3 is similar to FIG. 2 but shows a magnetic path formed in the damping valve by a solenoid.
FIG. 4 is a diagram showing a relationship between a damping force of the damping valve and a power current supplied to the solenoid.
FIG. 5 is a longitudinal sectional view of a damping valve according to a second embodiment of this invention.

### DESCRIPTION OF THE PREFERRED EMBODIMENTS

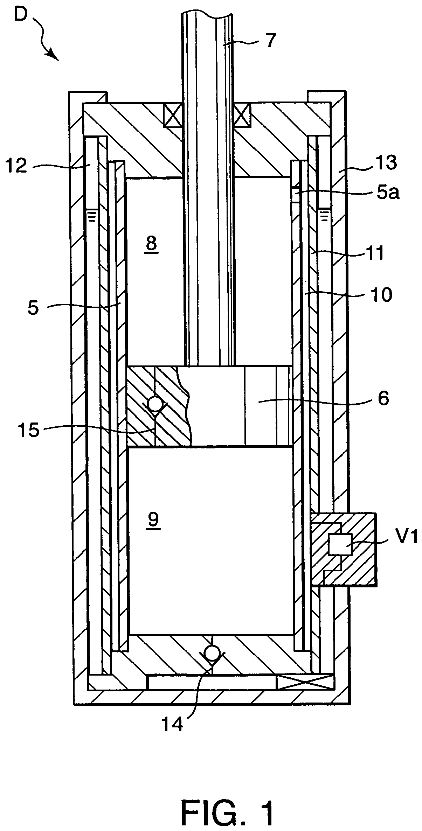

Referring to FIG. 1 of the drawings, a linear motion type shock absorber D comprises a cylinder 5, a piston 6 housed in the cylinder so as to be free to slide axially, a piston rod 7 fixed to the piston 6 and projecting axially from the cylinder 5, an inner tube 11 surrounding the cylinder 5, and an outer tube 13 surrounding the inner tube 11.

The interior of the cylinder 5 is divided by the piston 6 into a rod side chamber 8 and a piston side chamber 9. These chambers 8, 9 are filled with working fluid. Oil or any other incompressible fluid may serve as the working fluid. The rod side chamber 8 communicates with a discharge passage 10, which passes through an annular space between the cylinder 5 and the inner tube 11, via a communication hole 5a formed on a tip of the cylinder 5. An annular space formed between the inner tube 11 and the outer tube 13 serves as a reservoir 12 in which the working fluid accumulates together with gas. The discharge passage 10 is connected to the reservoir 12 via a damping valve V1.

The piston side chamber 9 and the reservoir 12 are connected via a check valve 14 which is installed in the bottom of the cylinder 5. The check valve 14 allows the working fluid to flow from the reservoir 12 to the piston side chamber 9 while preventing the working fluid from flowing in the opposite direction.

The rod side chamber 8 and the piston side chamber 9 are connected via a check valve 15 which is installed in the piston 6. The check valve 15 allows the working fluid to flow from the piston side chamber 9 to the rod side chamber 8 through the piston 6 while preventing the working fluid from flowing in the opposite direction.

This shock absorber D is a so-called uniflow type shock absorber in which the working fluid is always circulated in one direction irrespective of the direction of the piston stroke.

Specifically, when the piston 6 performs a contraction stroke, or in other words when the piston 6 strokes downward in the figure, the piston side chamber 9 decreases and the rod side chamber 8 enlarges. The working fluid in the piston side chamber 9 flows into the rod side chamber 8 through the check valve 15. Although the rod side chamber 8 enlarges, the total capacity of the rod side chamber 8 and the piston side chamber 9 decreases by the volume of the piston rod 7 that enters the cylinder 5 during the contraction stroke of the piston 6. This variation in the capacity of the cylinder 5 causes a part of the fluid in the rod side chamber 8 to be discharged into the reservoir 12 through the discharge passage 10 and the damping valve V1. The working fluid passing through the damping valve V1 generates a contraction damping force.

When the piston 6 performs an elongation stroke, or in other words when the piston 6 strokes upward in the figure, the piston side chamber 9 enlarges and the rod side chamber 8 decreases. Accordingly, the working fluid in the reservoir 12 flows into the piston side chamber 9 through the check valve 14, and the working fluid in the rod side chamber 8 is discharged into the reservoir 12 through the discharge passage 10 and the damping valve V1. The working fluid passing through the damping valve V1 generates an elongation damping force.

As described above, when the shock absorber D operates, a part of the working fluid in the rod side chamber 8 is always discharged into the reservoir 12 through the damping valve V1 so as to generate a damping force, irrespective of the stroke direction of the piston 6. The magnitude of the contraction damping force and that of the elongation damping force can be made equal by setting the cross-sectional area of the piston rod 7 to be equal to half of the cross-sectional area of the cylinder 5.

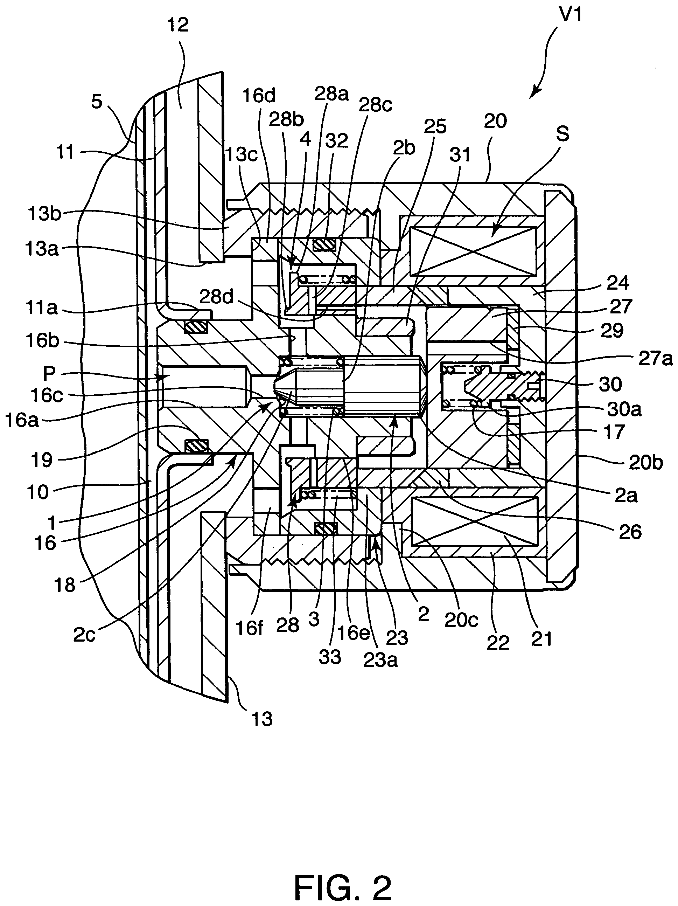

Referring to FIG. 2, the damping valve V1 is disposed in a flow path P which connects the discharge passage 10 and the reservoir 12. The damping valve V1 comprises a normal state operation valve 1 and an emergency state operation valve 4 installed in a case 20.

The normal state operation valve 1 comprises a valve body 2 fitted into a valve housing 16, an annular valve seat 18 formed as a part of the valve housing 16, a solenoid S which exerts a thrusting force on the valve body 2 towards the valve seat 18, and a spring 3 which biases the valve body 2 against the thrusting force of the solenoid S or in a direction to increase the flow cross-sectional area between the valve body 2 and the valve seat 18.

The inner tube 11 has an opening in a lateral direction in the form of a sleeve 11a. The valve housing 16 has a cylindrical tip which is fitted into the sleeve 11a. A seal member 19 is applied between the sleeve 11a and the cylindrical tip of the valve housing 16 so as to prevent the working fluid from leaking to the outside of the inner tube 11.

A lateral hole 16a and a vertical hole 16b are formed through the valve housing 16. These holes 16a, 16b constitute the flow path P. An end of the lateral hole 16a opens onto the discharge passage 10 and another end of the lateral hole 16a has an opening on the opposite face of the valve housing 16 so as to accommodate the valve body 2. The lateral hole 16a has a small inner diameter part 16c which serves as the valve seat 18.

The valve body 2 comprises a large diameter part 2a which is fitted into the lateral hole 16a, a small diameter part 2b which projects from a tip of the large diameter part 2a towards the valve seat 18, and a conical valve head 2c formed on a tip of the small diameter part 2b so as to be seated on the valve seat 18.

The small diameter part 2b forms an annular space in the lateral hole 16a. The vertical hole 16b opens onto this annular space. The vertical hole 16b also has openings onto the outside of the valve housing 16.

The spring 3 is disposed in the annular space between a step formed between the large diameter part 2a and the small diameter part 2b of the valve body 2, and a step formed by the small diameter part 16c in the valve housing 16.

The solenoid S comprises a bobbin 22 fitted into the case 20 and a coil 21 wound onto the bobbin 22. The bobbin 22 is positioned by a flange 20c formed on the inner circumference of the case 20 and projecting inward. The bobbin 22 is formed in a cylindrical shape. A first fixed iron core 24 and a second fixed iron core 25 are fitted into the inner circumference of the bobbin 22.

A spacer 26 made from a nonmagnetic material is interposed between the first fixed iron core 24 and the second fixed iron core 25. The first fixed iron core 24 is formed in a cylindrical shape having a bottom. The second fixed iron core 25 and the spacer 26 are formed in a cylindrical shape having openings at both ends, respectively.

Cylindrical walls of the first fixed iron core 24, the spacer 26, and the second fixed iron core 25 are made to have an identical thickness such that these members 24-26 form one continuous cylinder fitted into the inner circumference of the bobbin 22.

The case 20 is formed in a cylindrical shape having two open ends, one of which is closed by a lid 20b fixed by staking the edge of the case 20 inward. An end of the bobbin 22 and the bottom of the first fixed iron core 24 are supported by the lid 20b.

The outer tube 13 has an opening 13a which surrounds the sleeve 11a. A tube 13b is fixed to the opening 13a by welding. The tube 13b provides structural support to the case 20 and the valve housing 16. Another open end of the case 20 is screwed onto the outer circumference of the tube 13b.

A movable iron core 27 is fitted into the continuous cylinder constituted by the first fixed iron core 24, the spacer 26, and the second fixed iron core 25 so as to be free to slide axially. The rear end of the large diameter part 2a of the valve body also projects into this continuous cylinder from the valve housing 16. The movable iron core 27 is disposed between the rear end of the large diameter part 2a of the valve body 2 and the bottom of the first fixed iron core 24. A washer 29 made from a nonmagnetic material is interposed between the movable iron core 27 and the bottom of the first fixed iron core 24. The spring 3 which biases the valve body 2 in the direction to increase the flow cross-sectional area of the gap between the valve body 2 and the valve seat 18 causes the valve body 2 to push the movable iron core 27 towards the bottom of the first fixed iron core 24.

The movable iron core 27 has a recess which has an opening directed towards the bottom of the first fixed iron core 24 so as to accommodate a spring 17 and a part of a spring force adjusting screw 30. The spring force adjusting screw 30 is screwed into a screw hole formed through the bottom of the first fixed iron core 24 and projects into the recess. The spring force adjusting screw 30 has a flange 30a on its outer circumference in the recess to support an end of the spring 17. The other end of the spring 17 is in contact with a bottom of the recess of the movable iron core 27.

According to the above support structure of the movable iron core 27, the initial spring load of the spring 17, exerted on the movable iron core 27, can be set arbitrarily by rotating the spring force adjusting screw 30 from the outside before fixing the lid 20b to the case 20. If the lid 20b is made detachable from the case 20, the spring force adjusting screw 30 can be manipulated at any time. Since the spring 3 and the spring 17 are arranged in series, rotating the spring force adjusting screw 30 adjusts not only the initial spring load of the spring 17 but also the initial spring load of the spring 3.

The movable iron core 27 has a through-hole 27a to equalize fluid pressures acting on the two ends of the movable iron core 27.

The movable iron core 27 is pushed against the first fixed iron core 24 by the biasing force of the spring 17 and stays in a retracted position in which the movable iron core 27 contacts the washer 29 when the solenoid S is not energized. The length of the spacer 26 is set such that a tip of the movable iron core 27 in the retracted position stays in contact with or nearby the second fixed iron core 25. Further, the contact faces of the movable iron core 27 and the spacer 26 are formed in a conical shape such that magnetic flux formed by the solenoid S concentrates on the inner side of the contact face of the movable iron core 27.

The movable iron core 27 can be displaced towards the valve body 16 while pushing the valve body 2 towards the valve seat 18. This displacement is limited when the movable iron core 27 comes into contact with a stopper 31 which is made from a nonmagnetic material and fitted onto the outer circumference of the valve body 16.

The washer 29 and the stopper 31 are preferably made of synthetic resin in view of suppressing noise generated when the movable iron core 27 comes into contact with them.

The valve housing 16 comprises a flange 16d and a large diameter part 16e on its outer circumference on both sides of the vertical hole 16b. The flange 16d is fitted into the tube 13b such that an outer circumferential part of the flange 16d comes into contact with a step 13c formed at an end of the tube 13b nearby the opening 13a. The flange 16d has through-holes 16f so as to connect the vertical hole 16b and the reservoir 12.

A spacer 23 made from a nonmagnetic material is interposed between the flange 20c of the case 20 and the flange 16d. By screwing the case 20 onto the outer circumference of the tube 13b, the flange 16d is gripped between the step 13c and the flange 20c via the spacer 23.

The spacer 23 is formed in a cylindrical shape and has a flange 23a at an end which projects inward. The spacer 23 is fitted into the inner circumference of the tube 13b and a seal member 32 is applied between the spacer 23 and the tube 13b so as to prevent the working fluid in the flow path P from leaking to the outside of the tube 13b.

A tip of the second fixed iron core 25 is caused to project from the bobbin 22 and fitted into the inner circumference of the flange 23a.

The emergency state operation valve 4 is disposed in the spacer 23. The emergency state operation valve 4 comprises a valve body 28 and a spring 33.

The valve body 28 is made from a magnetic material and functions as another movable iron core. The valve body 28 is formed in a cylindrical shape and fitted onto the outer circumference of the large diameter part 16e of the valve housing 16 so as to be free to slide axially.

The valve body 28 has a flange part 28a on a tip facing the flange 16d of the valve housing 16. An annular projection 28b projecting towards the flange 16d is formed on the flange part 28a. The spring 33 is interposed between the flange part 28a and the flange 23a of the spacer 23. The valve body 28 is biased by the spring 33 towards the flange 16d. Accordingly, when the solenoid S is not energized, the valve body 28 is held in an advanced position in which the annular projection 28b contacts the flange 16d of the valve housing 16.

The valve body 28 has orifices 28c that connect the inner space and the outer space of the valve body 28. The space delimited by the valve body 28 in the continuous cylinder constituted by the first fixed iron core 24, the spacer 26, and the second fixed iron core 25 is connected to the orifice 28c via a communicating hole 28d which is formed axially in the valve body 28. When the valve body 28 is in the advanced position, the vertical hole 16b and the reservoir 12 is connected only through the orifices 28c. When, on the other hand, the valve body 28 is in a retracted position in which the valve body 28 comes into contact with the second fixed iron core 25, a gap formed between the annular projection 28b and the flange 16d allows the working fluid to flow between the vertical hole 16b and the reservoir 12 without exerting high resistance.

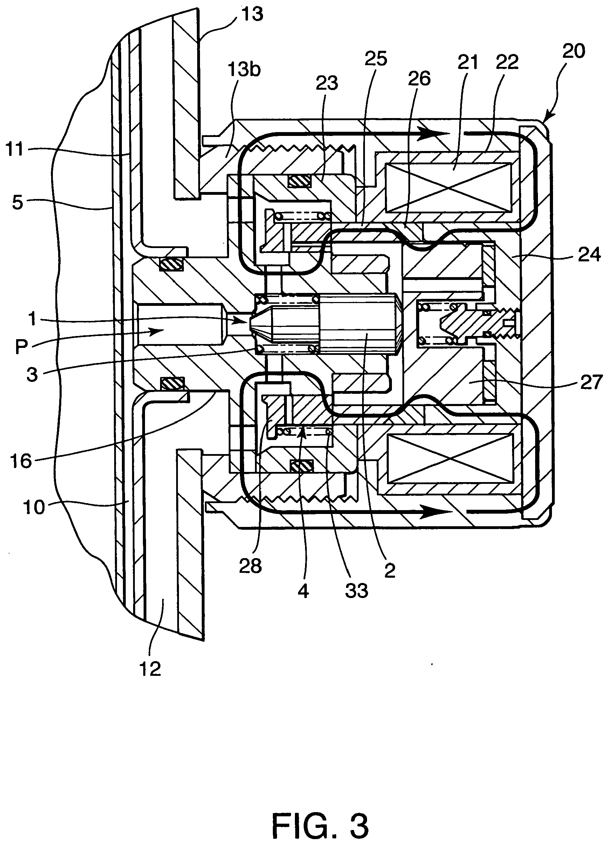

Referring to FIG. 3, the valve housing 16, the tube 13b, the case 20, the lid 20b, the first fixed iron core 24, the movable iron core 27, the second fixed iron core 25, the valve body 28 of the emergency state operation valve 4, and the valve housing 16 are made from a magnetic material, and when the solenoid S is energized, a magnetic path is formed through these members as shown by the arrows in the figure.

As a result, the movable iron core 27 and the valve body 28 of the emergency state operation valve 4 are attracted by the second fixed iron core 25. When the power current supplied to the solenoid S exceeds a predetermined value, the magnetic force acting on the valve body 28 becomes greater than the biasing force of the spring 33, and therefore the valve body 28 is displaced to the retracted position in which the valve body 28 comes into contact with the second fixed iron core 25. When the valve body 28 is in the retracted position, the gap between the annular projection 28b and the flange 16d reaches a maximum. In this state, the emergency state operation valve 4 allows the working fluid to pass through the gap without generating a damping force.

The movable iron core 27 is pushed by the spring 3 towards the bottom of the first fixed iron core 24. It is also pushed by the spring 17 in the opposite direction. The biasing force of the spring 3 is set greater than that of the spring 17, and when no magnetic force acts on the movable iron core 27, the movable iron core 27 is held in the retracted position as described above.

As the power current supplied to the solenoid S increases, the magnetic force acting on the movable iron core 27 becomes greater than the difference between the biasing forces of the springs 3 and 17. The movable iron core 27 then moves towards the valve housing 16 while pushing the valve body 2 of the normal state operation valve 1 towards the valve seat 18.

As a result, the flow path P passing through the gap between the valve seat 18 and the valve head 2c of the valve body 2 is narrowed, and a damping force is generated when the working fluid passes through this gap. The magnitude of the generated damping force depends on the width of this gap, or in other words on the power current supplied to the solenoid S.

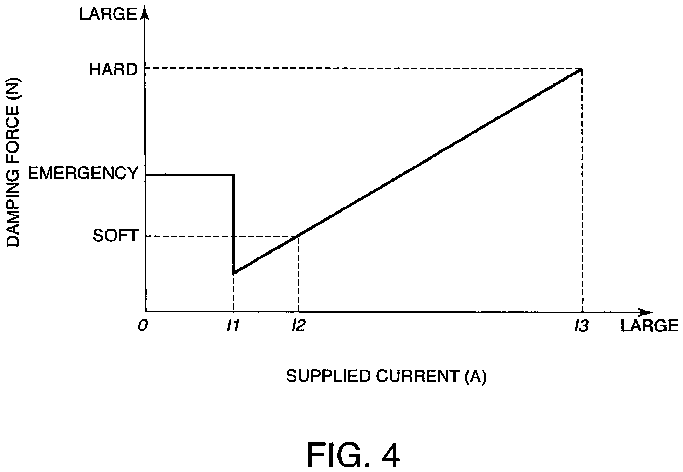

Referring to FIG. 4, in a normal operation of the shock absorber D, a power current between values *I2* and *I3* is supplied to the solenoid S. Herein, the predetermined value is set at *I1,* which is smaller than the values *I2* and *I3.* When a power current between *I2* and *I3* is supplied to the solenoid S, the emergency state operation valve 4 keeps the valve body 28 in the retracted position such that no resistance is exerted on the working fluid passing through the emergency state operation valve 4.

On the other hand, the movable iron core 27 is driven towards the valve housing 16 so as to narrow the gap between the valve seat 18 and the valve head 2c of the normal state operation valve 1. The normal state operation valve 1 thus generates a damping force corresponding to the power current supplied to the solenoid S. As the power current increases, the generated damping force increases as shown in the figure.

When, on the other hand, the power current supplied to the solenoid S is not greater than the predetermined value *I1*, the magnetic force acting on the movable iron core 27 is not sufficient to drive the movable iron core 27 from the retracted position, and hence the gap between the valve seat 18 and the valve head 2c stays at the maximum and the normal state operation valve 1 does not generate a damping force.

In the emergency state operation valve 4, the magnetic force acting on the valve body 28 is not sufficient to keep the valve body 28 in the retracted position against the biasing force of the spring 33, and the valve body 28 displaces to the advanced position in which the annular projection 28b comes into contact with the flange 16d. In this state, the orifices 28c form the only communicating path between the vertical hole 16b and the reservoir 12. Due to the limited cross-sectional area of the orifices 28c, the emergency state operation valve 4 generates a great damping force as the working fluid passes through the orifices 28c. As long as the power current supplied to the solenoid S is smaller than the predetermined value *I1*, the damping force characteristic of the shock absorber D is constant, as shown in the figure, irrespective of the power current supplied to the solenoid S.

It should be noted that even when the valve body 28 is in the retracted position, the communicating hole 28d is not blocked by the second fixed iron core 25, and communication between the space in the second fixed iron core 25 and the flow path P is maintained. The communicating hole 28d therefore prevents the working fluid in this space from blocking displacement of the movable iron core 27.

The above situation also occurs in a state where no power current is supplied to the solenoid S.

As described above, in the damping valve V1 according to this invention, the damping force generated in the normal state operation valve 1 and the damping force generated by the emergency state operation valve 4 are controlled separately using the single solenoid S. Switch-over between the normal state operation valve 1 and the emergency state operation valve 4 is therefore performed without fail.

As a result, the damping valve V1 ensures generation of an expected damping force during an emergency operation while enabling wide-range adjustment of the damping force during a normal operation.

The initial load acting on the valve body 2 of the normal state operation valve 1 can be varied widely by rotating the spring force adjusting screw 30, without affecting the operation characteristics of the emergency state operation valve 4.

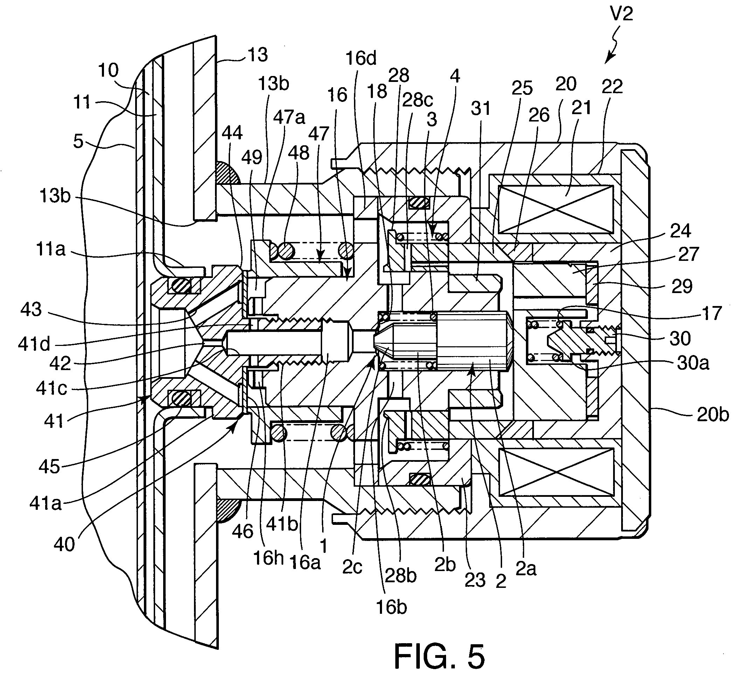

Referring to FIG. 5, a second embodiment of this invention will be described.

A damping valve V2 according to this embodiment further comprises a main valve 40. Although the damping valve V2 comprises the normal state operation valve 1 and the emergency state operation valve 4 which have identical constructions to those of the first embodiment, the normal state operation valve 1 in the damping valve V2 is provided not for generating a damping force but for regulating a back pressure applied to the main valve 40 when the damping valve V2 operates normally with the power current supplied to the solenoid S. The emergency state operation valve 4 in the damping valve V2 has a function to regulate the back pressure applied to the main valve 40 in an emergency state where the solenoid S is supplied with a poor or no power current.

The main valve 40 comprises an adaptor 41. The adaptor 41 comprises a base portion 41a fitted into the sleeve 11a and a shaft portion 41b onto which the tip of the valve housing 16 is screwed. A seal member 45 is applied between the sleeve 11a and the base portion 41a so as to prevent the working fluid from leaking to the outside of the sleeve 11a. A lateral hole 41c connected to the lateral hole 16a of the valve housing 16 is formed in the shaft portion 41b. A valve body 46 in the form of a leaf is fitted onto the outer circumference of the shaft portion 41b. The inner circumferential portion of the valve body 46 is gripped between the adaptor 41 and the tip of the valve housing 16.

Main passages 43 are formed through the adaptor 41 to lead the working fluid from the discharge passage 10 to the valve body 46. The adaptor 41 comprises a valve seat 44 on which the outer circumferential portion of the valve body 46 is seated. The outer circumferential portion of the valve body 46 lifts from the valve seat 44 according to a balance of the forces exerted thereon. When the outer circumferential portion of the valve body 46 is lifted from the valve seat 44, the working oil in the main passages 43 flows directly into the reservoir 12 without passing through the normal state operation valve 1 or the emergency state operation valve 4.

The adaptor 41 also has an inlet orifice 42 in its center so as to connect the discharge passage 10 to the lateral hole 41c. The orifice 42 may be replaced by a choke. In this embodiment, the flow path P is constituted by the inlet orifice 42, the lateral hole 41c, the lateral hole 16a, the normal state operation valve 1, the vertical hole 16b, and the emergency state operation valve 4. The main valve 40 bypasses the flow path P and connects the discharge passage 10 to the reservoir 12 directly.

A slider 47 having a flange 47a is fitted onto the outer circumference of the tip of the valve housing 16 so as to be free to slide axially. A spring 48 is gripped between the flange 47a and the flange 16d of the valve housing 16 so as to bias the slider 47 towards the outer circumferential part of the valve body 46.

The valve housing 16 has a notch in the outer circumferential part of the tip so as to form a back pressure chamber 49 on the inside of the slider 47. The back pressure chamber 49 exerts a back pressure on the valve body 46. It should be noted that the function required of the slider 47 is to shut off the back pressure chamber 49 from the outside. The spring force of the spring 48 should be set at or in the vicinity of a minimum value at which contact can be maintained between the slider 47 and the valve body 46.

The back pressure chamber 49 is connected to the lateral hole 41c via a through-hole 16h which traverses the tip of the valve housing 16 and a through-hole 41d which traverses the shaft portion 41b of the adaptor 41.

When the damping valve V2 operates normally, a power current between the values *I2* and *I3* is supplied to the solenoid S. The movable iron core 27 drives the valve body 2 towards the valve seat 18 such that the valve head 2c is seated on the valve seat 18. As the piston 6 performs a contraction stroke or an elongation stroke, the fluid pressure in the discharge passage 10 rises such that the fluid pressure is exerted as an opening pressure on the valve body 2 to lift the valve head 2c from the valve seat 18.

When the valve body 2 is lifted from the valve seat 18, a part of the working fluid in the discharge passage 10 flows into the reservoir 12 through the orifice 42 and the gap between the valve seat 18 and the valve head 2c. In this state, the pressure in the lateral hole 41c is introduced into the back pressure chamber 49 through the through-holes 41d and 16h as the back pressure.

As a result of the pressure loss in the orifice 42, the back pressure is lower than the fluid pressure in the discharge passage 10 and a differential pressure acts on the valve body 46 so as to lift the valve body 46 from the valve seat 44.

As the fluid pressure in the discharge passage 10 increases, the differential pressure exceeds the opening pressure of the valve body 46 and the valve body 46 is lifted from the valve seat 44.

The working fluid in the discharge passage 10 is then discharged into the reservoir 12 through the main valve 40 and generates a damping force when it passes through the gap formed between the valve body 46 and the valve seat 44. The magnitude of the damping force depends on the differential pressure acting on the valve body 46. The differential pressure is adjusted by the normal state operation valve 1, which operates according to the power current supplied to the solenoid S. The damping force generated in the main valve 40 can therefore be adjusted by varying the power current supplied to the solenoid S.

Specifically, by increasing the power current supplied to the solenoid S, the pressure loss in the normal state operation valve 1 increases and the back pressure in the back pressure chamber 49 increases. Accordingly, the damping force generated in the main valve 40 increases. By decreasing the power current supplied to the solenoid S, the pressure loss in the normal state operation valve 1 decreases and the back pressure in the back pressure chamber 49 decreases. Accordingly, the damping force generated in the main valve 40 decreases.

As can be understood from the above, the back pressure applied to the valve body 46 is controlled by the normal state operation valve 1 without being affected by the flow rate of the main valve 40. As long as the damping valve V2 is operated normally, therefore, the damping force can be controlled precisely by varying the power current supplied to the solenoid S, and hence, the relationship between the generated damping force and the power current supplied to the solenoid S is perfectly linear, as shown in FIG. 4, even when the stroke speed of the piston 6 is low.

Further, since the back pressure is controlled using the magnetic force of the solenoid S to control the generated damping force of this damping valve V2, fluctuation in the damping force can be suppressed.

When, on the other hand, the power current supplied to the solenoid S becomes smaller than the predetermined value *I1* or reaches zero, no effective magnetic force is exerted on the movable iron core 27 and the valve body 28 of the emergency state operation valve 4.

As a result, the valve body 2 of the normal state operation valve 1 displaces to the retracted position in accordance with the biasing force of the spring 3, and the valve body 28 of the emergency state operation valve 4 displaces to the advanced position in accordance with the biasing force of the spring 33.

In the retracted position of the valve body 2, the gap between the valve seat 18 and the valve head 2c reaches a maximum and the working fluid passes this gap generating almost no pressure loss. In the advanced position of the valve body 28, the gap between the flange 16d and the annular projection 28b is closed and the working fluid in the vertical hole 16b must pass the orifices 28c to reach to the reservoir 12.

In this state, the back pressure in the back pressure chamber 49 is determined by the flow resistance of the orifice 42 and the flow resistance of the orifices 28c. Specifically, when the flow resistance of the orifice 42 is relatively large with respect to the flow resistance of the orifices 28c, the back pressure in the back pressure chamber 49 is relatively low. When the flow resistance of the orifice 42 is relatively small with respect to the flow resistance of the orifices 28c, the back pressure in the back pressure chamber 49 is relatively high.

The damping force characteristic of the main valve 40 in the emergency state can be preset arbitrarily depending on the dimensions of the orifice 42.

In this damping valve V2, the back pressure of the main valve 40 is controlled by the normal state operation valve 1 in accordance with the power current supplied to the solenoid S in the normal state and controlled by the emergency state operation valve 4 to a predetermined pressure in the emergency state.

Since the damping force characteristic obtained through the above control is not affected by the flow rate of the main valve 40, the generated damping force of the damping valve V2 can be controlled precisely, irrespective of the stroke speed of the piston 6.

In the embodiments described above, the tube 13b, the valve housing 16, the case 20, the lid 20b, the first fixed iron core 24, the second fixed iron core 25, the movable iron core 27, and the valve body 28 of the emergency state operation valve 4 constitute a magnetic path forming member. The magnetic path forming member and the spacer 26 constitute a driving mechanism of the normal state operation valve 1 and the emergency state operation valve 4.

The contents of Tokugan 2008-067353 with a filing date of March 17, 2008 in Japan, are hereby incorporated by reference.

Although the invention has been described above with reference to certain embodiments, the invention is not limited to the embodiments described above. Modifications and variations of the embodiments described above will occur to those skilled in the art, within the scope of the claims.

For example, in the embodiments described above, the valve body 2 takes the shape of a poppet valve. However, the valve body 2 may be formed in any shape including a spool shape as long as it can be driven by the solenoid S.

With respect to the driving mechanism of the normal state operation valve 1 and the emergency state operation valve 4, various modifications are possible as long as it can drive the valve body 2 and the valve body 29 separately using the magnetic force of the solenoid S.

In the second embodiment, the valve body 46 of the main valve 40 is provided in the form of a leaf valve. This valve body form helps to prevent the size of the damping valve V2 from increasing, but the form of the valve body 46 is not limited to a leaf valve. The valve body 46 may be formed in the shape of a spool valve or a poppet valve.

The embodiments of this invention in which an exclusive property or privilege is claimed are defined as follows:

## Claims

1. A damping valve (V1, V2) comprising:
a flow path (P) of fluid;
a solenoid (S) which generates a magnetic force according to a supply of a power current;
a normal state operation valve (1) disposed in the flow path (P) and configured to exert a flow resistance on a flow of fluid in the flow path (P) according to a magnetic force of the solenoid (S) supplied with the power current;
an emergency state operation valve (4) disposed in the flow path (P) downstream of the normal state operation valve (1) and configured to exert a flow resistance on the flow according to an absence of the magnetic force;
a first driving mechanism (24-27) configured to drive the normal state operation valve (1) in a direction to increase the flow resistance thereof as the magnetic force increases; and
a second driving mechanism (13b, 16, 20, 20b, 28) configured to drive the emergency state operation valve (4) in a direction to decrease the flow resistance thereof as the magnetic force increases;
wherein the first driving mechanism (24-27) and the second driving mechanism (13b, 16, 20b 20, 28) are constructed to operate independently from each other under the magnetic force, and
the solenoid (S) comprises a fixed iron core (25) that attracts the emergency state operation valve (4) by the magnetic force and the emergency state operation valve (4) is configured to be in contact with the fixed iron core (25) when the power current exceeds a predetermined value so as not to exert the flow resistance on the flow.

2. The damping valve (V1, V2) as defined in Claim 1, wherein the normal state operation valve (1) comprises a valve body (2) driven by the first driving mechanism (24-27) to narrow a flow cross-sectional area of the flow path (P) as the power current supplied to the solenoid (S) increases.

3. The damping valve (V1, V2) as defined in Claim 2, wherein the emergency state operation valve (4) comprises a valve body (28) driven by the second driving mechanism (13b, 16, 20, 20b, 28) not to narrow the flow cross-sectional area of the passage (P) when the power current supplied to the solenoid (S) is greater than a predetermined value (I1) and to decrease the flow cross-sectional area of the passage (P) when the power current supplied to the solenoid (S) is not greater than the predetermined value (I1).

4. The damping valve (V1, V2) as defined in Claim 3, wherein the first and second driving mechanisms (13b, 16, 20, 20b, 24-27, 28) comprises a magnetic path forming member (13b, 16, 20, 20b, 24, 25, 27, 28) which forms a magnetic path around the solenoid (S) according to a supply of a power current to the solenoid (S), the valve body (2) of the normal state operation valve (1) is driven in a direction to close the flow path (P) when the magnetic path is formed, and the valve body (28) of the emergency state operation valve (4) is driven in a direction to open the flow path (P) when the magnetic path is formed.

5. The damping valve (V1, V2) as defined in Claim 4, wherein the magnetic path forming member (13b, 16, 20, 20b, 24, 25, 27, 28) comprises a movable iron core (27) which moves to form the magnetic path and drives the valve body (2) of the normal state operation valve (1) in the direction to close the flow path (P).

6. The damping valve (V1, V2) as defined in Claim 4 or Claim 5, wherein the normal state operation valve (1) further comprises a spring (3) which biases the valve body (2) of the normal state operation valve (1) in the direction to open the flow path (P), and the emergency state operation valve (4) further comprises a spring (33) which biases the valve body (28) of the emergency state operation valve (4) in the direction to close the flow path (P).

7. The damping valve (V1, V2) as defined in Claim 6, wherein the valve body (28) of the emergency state operation valve (4) comprises an orifice (28c) which connects an upstream side and a downstream side of the valve body (28) of the emergency state operation valve (4).

8. The damping valve (V1, V2) as defined in any one of Claim 3 through Claim 7, wherein the normal state operation valve (1) generates a damping force in response to a fluid flow in the flow path (P) when the power current supplied to the solenoid (S) is greater than the predetermined value (I1), and the emergency state operation valve (4) generates a damping force in response to a fluid flow in the flow path (P) when the power current supplied to the solenoid (S) is not greater than the predetermined value (I1).

9. The damping valve (V1, V2) as defined in any one of Claim 3 through Claim 7, further comprising a main valve (40) which comprises a valve body (46) to allow the fluid to bypass the normal state operation valve (1) and the emergency state operation valve (4) while generating a damping force corresponding to a differential pressure between an opening pressure and a back pressure acting on the valve body (46) of the main valve (40), the normal state operation valve (1) adjusts the back pressure acting on the valve body (46) of the main valve (40) when the power current supplied to the solenoid (S) is greater than the predetermined value (I1), and the emergency state operation valve (4) adjusts the back pressure acting on the valve body (46) of the main valve (40) when the power current supplied to the solenoid (S) is not greater than the predetermined value (I1)

10. The damping valve (V1, V2) as defined in Claim 9, wherein the flow path (P) comprises an inlet orifice (42) upstream of the normal state operation valve (1), and the back pressure acting on the valve body (46) of the main valve (40) is supplied from the flow path (P) between the inlet orifice (42) and the normal state operation valve (1).

11. The damping valve (V1, V2) as defined in Claim 9 or Claim 10, wherein the valve body (46) of the main valve (40) is formed into a shape of a leaf.

12. The damping valve (V1, V2) as defined in any one of Claim 1 through Claim 11, wherein the damping valve (V1, V2) is installed in the flow path (P) which discharges the fluid from a cylinder (5) to a reservoir (12) of a shock absorber (D) in response to elongation and contraction of the shock absorber (D).

## Patentansprüche

1. Dämpfventil (V1, V2), das umfasst:
einen Strömungsweg (P) für Fluid;
einen Elektromagneten (S), der entsprechend einer Zufuhr von Kraftstrom eine Magnetkraft erzeugt;
ein Ventil (1) für Betrieb im Normalzustand, das in dem Strömungsweg (P) angeordnet und so eingerichtet ist, dass es einen Strömungswiderstand auf einen Strom von Fluid in dem Strömungsweg (P) entsprechend einer Magnetkraft des Elektromagneten (S) ausübt, dem der Kraftstrom zugeführt wird;
ein Ventil (4) für Betrieb im Ausnahmezustand, das in dem Strömungsweg (P) dem Ventil (1) für Betrieb im Normalzustand nachgelagert angeordnet und so eingerichtet ist, dass es bei einem Nichtvorhandensein der Magnetkraft einen Strömungswiderstand auf den Strom ausübt;
einen ersten Antriebs-Mechanismus (24-27), der so eingerichtet ist, dass er das Ventil (1) für Betrieb im Normalzustand in einer Richtung antreibt, in der der Strömungswiderstand desselben erhöht wird, wenn die Magnetkraft zunimmt; sowie
einen zweiten Antriebs-Mechanismus (13b, 16, 20, 20b, 28), der so eingerichtet ist, dass er das Ventil (4) für Betrieb im Ausnahmezustand in einer Richtung antreibt, in der der Strömungswiderstand desselben verringert wird, wenn die Magnetkraft zunimmt;
wobei der erste Antriebs-Mechanismus (24-27) und der zweite Antriebs-Mechanismus (13b, 16, 20b, 20, 28) so konstruiert sind, dass sie unter der Wirkung der Magnetkraft unabhängig voneinander arbeiten, und
der Elektromagnet (S) einen stationären Eisenkern (25) umfasst, der das Ventil (4) für Betrieb im Ausnahmezustand mit der Magnetkraft anzieht, und das Ventil (4) für Betrieb im Ausnahmezustand so eingerichtet ist, dass es in Kontakt mit dem stationären Eisenkern (25) ist, wenn der Kraftstrom einen vorgegebenen Wert überschreitet, und so den Strömungswiderstand nicht auf den Strom ausübt.

2. Dämpfventil (V1, V2) nach Anspruch 1, wobei das Ventil (1) für Betrieb im Normalzustand einen Ventilkörper (2) umfasst, der von dem ersten Antriebs-Mechanismus (24-27) so angetrieben wird, dass sich ein Strömungs-Querschnitt des Strömungsweges (P) verengt, wenn der dem Elektromagneten (S) zugeführte Kraftstrom zunimmt.

3. Dämpfventil (V1, V2) nach Anspruch 2, wobei das Ventil (4) für Betrieb im Ausnahmezustand einen Ventilkörper (28) umfasst, der von dem zweiten Antriebs-Mechanismus (13b, 16, 20, 20b, 28) so angetrieben wird, dass er den Strömungs-Querschnitt des Kanals (P) nicht verengt, wenn der dem Elektromagneten (S) zugeführte Kraftstrom über einem vorgegebenen Wert (I1) liegt, und den Strömungs-Querschnitt des Kanals (P) verringert, wenn der dem Elektromagneten (S) zugeführte Kraftstrom nicht über dem vorgegebenen Wert (I1) liegt.

4. Dämpfventil (V1, V2) nach Anspruch 3, wobei der erste und der zweite Antriebs-Mechanismus (13b, 16, 20, 20b, 24-27, 28) ein einen magnetischen Weg bildendes Element (13b, 16, 20, 20b, 24, 25, 27, 28) umfassen, der entsprechend einer Zufuhr eines Kraftstroms zu dem Elektromagneten (S) einen magnetischen Weg um den Elektromagneten (S) herum bildet, der Ventilkörper (2) des Ventils (1) für Betrieb im Normalzustand in einer Richtung angetrieben wird, in der der Strömungsweg (P) geschlossen wird, wenn der magnetische Weg gebildet wird, und der Ventilkörper (28) des Ventils (4) für Betrieb im Ausnahmezustand in einer Richtung angetrieben wird, in der der Strömungsweg (P) geöffnet wird, wenn der magnetische Weg gebildet wird.

5. Dämpfventil (V1, V2) nach Anspruch 4, wobei das einen magnetischen Weg bildende Element (13b, 16, 20, 20b, 24, 25, 27, 28) einen beweglichen Eisenkern (27) umfasst, der sich bewegt, um den magnetischen Weg zu bilden, und der den Ventilkörper (2) des Ventils (1) für Betrieb im Normalzustand in der Richtung antreibt, in der der Strömungsweg (P) geschlossen wird.

6. Dämpfventil (V1, V2) nach Anspruch 4 oder Anspruch 5, wobei das Ventil (1) für Betrieb im Normalzustand des Weiteren eine Feder (3) umfasst, die den Ventilkörper (2) des Ventils (1) für Betrieb im Normalzustand in der Richtung spannt, in der der Strömungsweg (P) geöffnet wird, und das Ventil (4) für Betrieb im Ausnahmezustand des Weiteren eine Feder (33) umfasst, die den Ventilkörper (28) des Ventils (4) für Betrieb im Ausnahmezustand in der Richtung spannt, in der der Strömungsweg (P) geschlossen wird.

7. Dämpfventil (V1, V2) nach Anspruch 6, wobei der Ventilkörper (28) des Ventils (4) für Betrieb im Ausnahmezustand eine Öffnung (28c) umfasst, die eine stromauf liegende Seite und eine stromab liegende Seite des Ventilkörpers (28) des Ventils (4) für Betrieb im Ausnahmezustand verbindet.

8. Dämpfventil (V1, V2) nach einem der Ansprüche 3 bis 7, wobei das Ventil (1) für Betrieb im Normalzustand in Reaktion auf einen Fluidstrom auf dem Strömungsweg (P) eine Dämpfkraft erzeugt, wenn der dem Elektromagneten (S) zugeführte Kraftstrom über dem vorgegebenen Wert (I1) liegt, und das Ventil (4) für Betrieb im Ausnahmezustand in Reaktion auf einen Fluidstrom auf dem Strömungsweg (P) eine Dämpfkraft erzeugt, Wenn der dem Elektromagneten (S) zugeführte Kraftstrom nicht über dem vorgegebenen Wert (I1) liegt.

9. Dämpfventil (V1, V2) nach einem der Ansprüche 3 bis 7, das des Weiteren ein Hauptventil (40) umfasst, das einen Ventilkörper (46) umfasst, der zulässt, dass das Fluid das Ventil (1) für Betrieb im Normalzustand und das Ventil (4) für Betrieb im Ausnahmezustand umgeht, während gleichzeitig eine Dämpfkraft erzeugt wird, die einer Druckdifferenz zwischen einem Öffnungsdruck und einem Gegendruck entspricht, der auf den Ventilkörper (46) des Hauptventils (40) wirkt, wobei das Ventil (1) für Betrieb im Normalzustand den auf den Ventilkörper (46) des Hauptventils (40) wirkenden Gegendruck reguliert, wenn der dem Elektromagneten (S) zugeführte Kraftstrom über dem vorgegebenen Wert (I1) liegt, und das Ventil (4) für Betrieb im Ausnahmezustand den auf den Ventilkörper (46) des Hauptventils (40) wirkenden Gegendruck reguliert, wenn der dem Elektromagneten (S) zugeführte Kraftstrom nicht über dem vorgegebenen Wert (I1) liegt.

10. Dämpfventil (V1, V2) nach Anspruch 9, wobei der Strömungsweg (P) eine Einlass-Öffnung (42) umfasst, die dem Ventil (1) für Betrieb im Normalzustand vorgelagert ist, und der auf den Ventilkörper (46) des Hauptventils (40) wirkende Gegendruck über den Strömungsweg (P) zwischen der Einlass-Öffnung (42) und dem Ventil (1) für Betrieb im Normalzustand zugeführt wird.

11. Dämpfventil (V1, V2) nach Anspruch 9 oder Anspruch 10, wobei der Ventilkörper (46) des Hauptventils (40) in Form eines Blattes ausgebildet ist.

12. Dämpfventil (V1, V2) nach einem der Ansprüche 1 bis 11, wobei das Dämpfventil (V1, V2) in dem Strömungsweg (P) installiert ist, der das Fluid in Reaktion auf die Verlängerung und Verkürzung eines Stoßdämpfers (D) aus einem Zylinder (5) in einen Vorratsbehälter (12) des Stoßdämpfers (D) ableitet.

## Revendications

1. Vanne d'amortissement (V1, V2) comprenant:
un trajet d'écoulement (P) de fluide:
un solénoïde (S) qui génère une force magnétique en fonction de l'alimentation d'un courant de puissance;
une vanne de fonctionnement à l'état normal (1) disposée dans le trajet d'écoulement (P) et configurée pour exercer une résistance à l'écoulement sur un écoulement de fluide dans le trajet d'écoulement (P) en fonction d'une force magnétique du solénoïde (S) alimenté en courant de puissance;
une vanne de fonctionnement à l'état d'urgence (4) disposée dans le trajet d'écoulement (P) en aval de la vanne de fonctionnement à l'état normal (1) et configurée pour exercer une résistance à l'écoulement sur l'écoulement selon une absence de force magnétique;
un premier mécanisme d'entraînement (24-27) configuré pour entraîner la vanne de fonctionnement à l'état normal (1) dans une direction permettant d'augmenter la résistance à l'écoulement lorsque la force magnétique augmente; et
un second mécanisme d'entraînement (13b, 16, 20, 20b, 28) configuré pour entraîner la vanne de fonctionnement à l'état d'urgence (4) dans une direction permettant de diminuer sa résistance à l'écoulement la force magnétique augmente;
dans lequel le premier mécanisme d'entraînement (24-27) et le second mécanisme d'entraînement (13b, 16, 20b 20, 28) sont conçus pour fonctionner indépendamment l'un de l'autre sous la force magnétique, et
le solénoïde (S) comprend un noyau de fer fixe (25) qui attire l'état d'urgence la vanne de commande (4) par la force magnétique et la vanne de fonctionnement à l'état d'urgence (4) est configurée pour être en contact avec le noyau de fer fixe (25) lorsque le courant de puissance dépasse une valeur prédéterminée de façon à ne pas exercer la résistance à l'écoulement sur l'écoulement.

2. Vanne d'amortissement (V1, V2) selon la revendication 1, dans laquelle la vanne de fonctionnement à l'état normal (1) comprend un corps de vanne (2) entraîné par le premier mécanisme d'entraînement (24-27) pour rétrécir une section transversale d'écoulement du trajet d'écoulement (P) lorsque le courant de puissance fourni au solénoïde (S) augmente.

3. Vanne d'amortissement (V1, V2) selon la revendication 2, dans laquelle la vanne de fonctionnement à l'état d'urgence (4) comprend un corps de vanne (28) entraîné par le second mécanisme d'entraînement (13b, 16, 20, 20b, 28) pour ne pas rétrécir la section transversale d'écoulement du passage (P) lorsque le courant de puissance fourni au solénoïde (S) est supérieur à une valeur prédéterminée (11) et pour diminuer la section transversale du passage (P) lorsque le courant de puissance fourni au solénoïde (S) n'est pas supérieur à la valeur prédéterminée (11).

4. Vanne d'amortissement (V1, V2) selon la revendication 3, dans laquelle le premier mécanisme d'entraînement et le second mécanisme d'entraînement (13b, 16, 20, 20b, 24-27, 28) comprennent un élément formant un trajet magnétique (13b, 16, 20, 20b, 24, 25, 27, 28) formant un trajet magnétique autour du solénoïde (S) selon une alimentation en courant de puissance du solénoïde (S), le corps de vanne (2) du la vanne de fonctionnement à l'état normal (1) est entraîné dans une direction permettant de fermer le trajet d'écoulement (P) lorsque le trajet magnétique est formé et le corps de vanne (28) de la vanne de fonctionnement à l'état d'urgence (4) est entraînée dans une direction permettant d'ouvrir le trajet d'écoulement (P) lorsque le trajet magnétique est formé.

5. Vanne d'amortissement (V1, V2) selon la revendication 4, dans laquelle l'élément formant le trajet magnétique (13b, 16, 20, 20b, 24, 25, 27, 28) comprend un noyau de fer mobile (27) qui se déplace pour former le trajet magnétique et entraîne le corps de vanne (2) à la vanne de fonctionnement à l'état normal (1) dans la direction de fermeture du trajet d'écoulement (P).

6. Vanne d'amortissement (V1, V2) selon la revendication 4 ou la revendication 5, dans laquelle la vanne de fonctionnement à l'état normal (1) comprend en outre un ressort (3) qui sollicite le corps de vanne (2) du vanne de fonctionnement à l'état normal (1) dans la direction permettant d'ouvrir le trajet d'écoulement (P), et la vanne de fonctionnement à l'état d'urgence (4) comprend en outre un ressort (33) qui sollicite le corps de vanne (28) de la vanne de fonctionnement à l'état d'urgence (4) dans la direction de fermeture du trajet d'écoulement (P).

7. Vanne d'amortissement (V1, V2) selon la revendication 6, dans laquelle le corps de vanne (28) de la vanne de fonctionnement à l'état d'urgence (4) comprend un orifice (28c) qui relie un côté amont et un côté aval du corps de vanne (28) de la vanne de fonctionnement à l'état d'urgence (4).

8. Vanne d'amortissement (V1, V2) selon l'une quelconque des revendications 3 à 7, dans laquelle la vanne de fonctionnement à l'état normal (1) génère une force d'amortissement en réponse à un écoulement de fluide dans le trajet d'écoulement (P) lorsque le courant de puissance fourni au solénoïde (S) est supérieur à la valeur prédéterminée (11) et la vanne de fonctionnement à l'état d'urgence (4) génère un force d'amortissement en réponse à un écoulement de fluide dans le trajet d'écoulement (P) lorsque le courant de puissance fourni au solénoïde (S) n'est pas supérieur à la valeur prédéterminée (11).

9. Vanne d'amortissement (V1, V2) selon l'une quelconque des revendications 3 à 7, comprenant en outre une vanne principale (40) qui comprend un corps de vanne (46) pour permettre au fluide de contourner la vanne de fonctionnement à l'état normal (1) et la vanne de fonctionnement à l'état d'urgence (4) tout en générant une force d'amortissement correspondant à une pression différentielle entre un pression d'ouverture et pression de retour agissant sur le corps de vanne (46) de la vanne principale (40), la vanne de fonctionnement à l'état normal (1) ajuste la contre-pression agissant sur la vanne corps (46) de la vanne principale (40) lorsque le courant de puissance fourni au solénoïde (S) est supérieure à la valeur prédéterminée (11) et la vanne de fonctionnement à l'état d'urgence (4) ajuste la contre-pression agissant sur le corps de vanne (46) de la vanne principale (40) lorsque le courant de puissance fourni au solénoïde (S) n'est pas supérieur à la valeur prédéterminée(11).

10. Vanne d'amortissement (V1, V2) selon la revendication 9, dans laquelle le trajet d'écoulement (P) comprend un orifice d'entrée (42) en amont de la vanne de fonctionnement à l'état normal (1), et le retour de pression agissant sur le corps de vanne (46) de la vanne principale (40) est fournie par le trajet d'écoulement (P) entre l'orifice d'admission (42) et la vanne de fonctionnement à état normal (1).

11. Vanne d'amortissement (V1, V2) selon la revendication 9 ou la revendication 10, dans laquelle le corps de vanne (46) de la vanne principale (40) est en forme d'une feuille.

12. Vanne d'amortissement (V1, V2) selon l'une quelconque des revendications 1 à 11, dans laquelle la vanne d'amortissement (V1, V2) est installée dans le trajet d'écoulement (P) qui décharge le fluide à partir d'un cylindre (5) à un réservoir (12) d'un amortisseur (D) en réponse à un allongement et une contraction de l'amortisseur (D).
